# EUROPÄISCHE PATENTSCHRIFT

(11) **EP 3 230 146 B1**
(45) Veröffentlichungstag und Bekanntmachung des Hinweises auf die Patenterteilung: **30.09.2020**
(21) Anmeldenummer: 15816686.8
(22) Anmeldetag: 07.12.2015
(51) Int. Cl.: B61D 17/08, H02G 3/04

(54) **KABELKANAL FÜR SCHIENENFAHRZEUG UND SCHIENENFAHRZEUG MIT KABELKANAL**
CABLE DUCT FOR A RAIL VEHICLE AND RAIL VEHICLE WITH A CABLE DUCT
CONDUIT DE CÂBLE CANAL POUR VÉHICULE FERROVIAIRE ET VÉHICULE FERROVIAIRE POURVU D'UN CONDUIT DE CÂBLE

(30) Priorität: 09.12.2014 DE 102014118242
(43) Veröffentlichungstag der Anmeldung: 18.10.2017
(73) Patentinhaber: Bombardier Transportation GmbH, 10785 Berlin (DE)
(72) Erfinder: GLOMB, Christian, 16766 Kremmen (DE)
(74) Vertreter: Zimmermann & Partner Patentanwälte mbB
(86) Internationale Anmeldenummer: PCT/EP2015/078883
(87) Internationale Veröffentlichungsnummer: WO 2016/091832

(56) Entgegenhaltungen:
- WO-A1-2014/165904
- AT-U1- 5 234
- JP-Y1- S5 132 953
- US-A- 5 730 400
- US-A1- 2005 173 596

## Beschreibung

### Technisches Gebiet

Die Erfindung betrifft einen Schienenfahrzeugwagen mit wenigstens einem Kabelkanal, insbesondere einem Kabelkanal mit Klemmbereich und Befestigungsbereich.

### Vorbekannter Stand der Technik

Ein Kabelkanal ermöglicht ein gebündeltes Führen von elektrischen Leitungen zur Versorgung des Schienenfahrzeugs. Dabei handelt es sich üblicherweise um abgekantete Lochbleche, befestigt auf Traversen oder einem Rahmen, welcher dann komplett oder teilweise vormontiert an das Fahrzeug angebracht wird. Üblicherweise wird der Kanal in seiner Form deutlich breiter als hoch ausgeführt, um die Leitungen und Kabel optimal verlegen zu können.

Aufgrund der steigenden sicherheitstechnischen Anforderungen im Schienenfahrzeugbau ist es erforderlich, die Leitungsverlegung, insbesondere über einem Drehgestell des Schienenfahrzeugs, wettertauglich, insbesondere wintertauglich, und steinschlagsicher zu gestalten. Dies bedeutet zum Beispiel eine nach Normlage feste Verlegung der Leitungen (wie zum Beispiel horizontal mit Fixpunkten im Abstand von 300 mm bis 400 mm) in einem mechanischen Kabelkanal. Eine freie Verlegung ist im Drehgestellbereich aufgrund der oben genannten Anforderungen nicht möglich.

Bekannte Lösungen der Leitungsverlegung über dem Drehgestell sehen Kabelkanäle im nicht sichtbaren Bereich vor. Diese Lösungen setzen aber einen relativ großen Einbauraum in diesen Bereichen voraus. Konventionelle Lösungen sind dabei meist umlaufend verschraubt oder beidseitig mit Clips (zum Beispiel Federclips) versehen, welche sich im Unterflurbereich des Schienenfahrzeugs lösen können und damit nicht genug Sicherheit bieten.

So wird beispielsweise in der DE 199 02 729 C1 ein Verfahren beschrieben, wie ein Kabelkanal von unten an den Wagenkasten montiert werden kann. Dazu wird der Kabelkanal auf ein Arbeitsgestell aufgelegt, auf diesem Arbeitsgestell befüllt und zum Wagenkasten verfahren, und mitsamt dem Arbeitsgestell unterhalb des Wagenkastens zu den Befestigungspunkten ausgerichtet und bis zum Anliegen an der Wagenkastenunterseite angehoben, in welcher Position das Befestigen der Trasse bzw. des Kabelkanals an der Wagenkastenunterseite erfolgt.

Die EP 1414 125 beschreibt eine Vorrichtung zur Aufnahme von Kabeln und dergleichen. Die Vorrichtung besteht aus einem U-förmigen Profil mit im Wesentlichen vertikalen Seitenwänden und einer Abdeckung, die daran festgeklemmt werden kann. Das Profil und die Abdeckung bestehen aus einem elektrisch leitfähigen Material und sind mit einer Außenschicht aus weniger leitfähigem Material versehen. Diese Außenschicht ist an definierten Positionen der Vorrichtung entfernt, so dass in der geschlossenen Position ein elektrischer Kontakt zwischen der Abdeckung und dem U-förmigen Profils bereitgestellt wird. Zum Bereitstellen dieses elektrischen Kontakts sind das Profil und die Abdeckung mit geometrischen Ausformungen ausgestattet, wie zum Beispiel Schultern und Auflageflächen.

Aus der EP 1 767 426 A2 ist ein Schienenfahrzeug bekannt, bei dem die elektrischen Leitungen in einem Leitungskanal untergebracht sind, der ebenfalls unterhalb des Wagenkastens des Schienenfahrzeugs angeordnet ist. Der Leitungskanal weist eine dem Verlauf der Wagenkastenunterseite angepasste Kanalform auf.

Die EP 1 808 365 A1 beschäftigt sich mit der Führung von Hydraulikleitungen im Dachbereich. Ein Fahrzeug weist ein integriertes Dachmodulelement auf, das einen oberen Längskantenbereich einer Fahrzeugstruktur bildet und ein oder mehrere zusätzliche Funktionselemente aufweist, wobei in dem Dachmodulelement mindestens ein Luftführungskanal und/oder wenigstens eine Pneumatik- und/oder Hydraulikleitung integriert ist.

Die WO2004/023618 beschreibt einen Abschnitt einer Tragschiene, deren Seitenwände einen Kanal definieren. Die Randabschnitte der Seitenwände sind derart geformt, dass weitere Kanäle gebildet werden. Diese weiteren Kanäle können als Dichtungsraum zwischen dem Deckel des Kanals und den Seitenwänden des Kanals verwendet werden. Zum technischen Umfeld wird weiterhin auf die Dokumente WO 2014/165904 A, US 2005/0173596 A und AT 005 234 U verwiesen.

### Nachteile des Standes der Technik

Die obigen Lösungen können nicht zugleich eine einfache (und damit kostensparende) Montage und eine Sicherung gegen Eindringen von Schmutz, Staub und/oder Wasser in den Kabelkanal bieten.

### Problemstellung

Es ist daher Aufgabe der vorliegenden Erfindung, einen Kabelkanal zur Führung von Kabeln in einem Schienenfahrzeug vorzuschlagen, der eine einfache und sichere Montage des Kabelkanals ermöglicht und gleichzeitig einen zuverlässigen Schutz gegen Schmutz und Wasser bietet.

### Erfindungsgemäße Lösung

Diese Aufgabe wird gelöst durch einen Schienenfahrzeugwagen nach Anspruch 1. Weitere Ausführungsformen, Modifikationen und Verbesserungen ergeben sich anhand der folgenden Beschreibung und der beigefügten Ansprüche.

Gemäß einer Ausführungsform wird eine Kabelkanalvorrichtung für ein Schienenfahrzeug zur Verfügung gestellt. Die Kabelkanalvorrichtung umfasst einen Kabelkanalkörper mit einer Kabelkanalöffnung und einem Kabelkanaldeckel zum Verschließen der Kabelkanalöffnung. Der Kabelkanalkörper weist einen Klemmbereich mit einer Aufnahme für einen Randbereich des Kabelkanaldeckels auf, in die der Randbereich des Kabelkanaldeckels einsteckbar ist und die als Schwenklager zum Verschwenken des Kabelkanaldeckels relativ zum Kabelkanalkörper ausgebildet ist. Der Kabelkanalkörper umfasst weiterhin einen Befestigungsbereich mit einem Fixiermittel zum lösbaren Fixieren des Kabelkanaldeckels am Kabelkanalkörper. Dabei ist die Kabelkanalöffnung zwischen dem Befestigungsbereich und dem Klemmbereich angeordnet. Zum Verschließen der Kabelkanalöffnung durch Verschwenken des Kabelkanaldeckels relativ zum Kabelkanalkörper ist der in der Aufnahme des Kabelkanalkörpers eingesteckte Randbereich des Kabelkanaldeckels in der Aufnahme des Kabelkanalkörpers verklemmbar. Das Fixiermittel hält den Kabelkanaldeckel in dessen geschlossener Position.

Die Kabelkanalvorrichtung gemäß Ausführungsformen der Erfindung erlaubt eine Befestigung des Kabelkanaldeckels an zwei Seiten des Kabelkanalkörpers. Die Befestigung an der einen Seite (im Befestigungsbereich) erfolgt mittels Fixiermittel, und die Befestigung an der anderen Seite (Klemmbereich) erfolgt mittels Klemmung in der Aufnahme des Kabelkanalkörpers. Die Klemmung in der Aufnahme kann dabei durch eine Schwenkbewegung des Kabelkanaldeckels erreicht werden. Darauf folgt die Befestigung mittels Fixiermittel im Befestigungsbereich. Der Klemmbereich bietet daher nicht nur die Funktion des Festklemmens und Haltens des Kabelkanaldeckels in der Aufnahme des Kabelkanalkörpers, sondern auch eine Positionierung des Kabelkanaldeckels bis zur endgültigen Fixierung durch die Fixiermittel im Befestigungsbereich. Durch diese Art der Positionierung und Befestigung ist es zum Beispiel möglich, die Kabelkanalvorrichtung seitlich zu verschließen, ohne dass ein Zugang zur Kabelkanalvorrichtung von oben oder unten nötig wäre. Dadurch kann wiederum ein an der Außenseite eines Schienenfahrzeugs liegender Einbauraum für die Kabelkanalvorrichtung genutzt werden, da die Kabelkanalvorrichtung seitlich zugänglich ist.

Die Aufnahme des Kabelkanalkörpers, in die ein Randbereich des Kabelkanaldeckels geklemmt wird, ermöglicht zudem eine nicht sichtbare Befestigung des Kabelkanaldeckels am Kabelkanalkörper zumindest an einer Seite, die zum Beispiel die Außenseite eines Schienenfahrzeugs sein kann. Eine unauffällige Gestaltung des Kabelkanaldeckels erlaubt es, dass der Kabelkanaldeckel als Teil der Außenverkleidung des Schienenfahrzeugs wirkt oder dient, zum Beispiel indem der Kabelkanaldeckel die Kontur der Außenverkleidung des Schienenfahrzeugs weiterführt. Die Kabelkanalvorrichtung nach hierin beschriebenen Ausführungsformen bietet außerdem eine einfache Montage und Demontage, da (im Querschnitt der Kabelkanalvorrichtung gesehen) nur an einer Seite, nämlich dem Befestigungsbereich, eine Fixierung durch Fixiermittel eingesetzt werden muss, während die Befestigung auf der anderen Seite (dem Klemmbereich) durch eine einfache Schwenkbewegung des Kabelkanaldeckels erzielt wird. Im Vergleich zu bestehenden Systemen kann man hier von einem halbierten Montageaufwand sprechen. Die Klemmung des Kabelkanaldeckels in die Aufnahme des Kabelkanalkörpers an einer Seite, dem Klemmbereich, ermöglicht zudem eine gute Abdichtung gegen Eindringen von Feuchtigkeit und Schmutz.

Erfindungsgemäß wird die Aufnahme des Kabelkanalkörpers durch einen Außenbereich des Kabelkanalkörpers und ein Gegenlager gebildet, wobei sich das Gegenlager der Aufnahme am Kabelkanalkörper befindet. In einer Ausführungsform ist das Gegenlager der Aufnahme insbesondere an der Innenseite des Kabelkanalkörpers befestigt. Dabei wird der Randbereich des Kabelkanaldeckels schwenkend in die Aufnahme zwischen den Außenbereich und das Gegenlager eingeführt. Das Gegenlager drückt den Kabelkanaldeckel an den Außenbereich der Aufnahme. Dadurch wird nicht nur eine zuverlässige Klemmkraft auf den Randbereich des Kabelkanaldeckels ausgeübt, sondern auch der Randbereich des Kabelkanaldeckels zwischen Außenseite der Kabelkanalvorrichtung und Innerem des Kabelkanalkörpers positioniert. Diese Verschränkung ermöglicht eine gute Abdichtung und eine zuverlässige Klemmung des Kabelkanaldeckels. Der Außenbereich der Aufnahme kann beispielsweise im montierten Zustand, d.h. wenn die Kabelkanalvorrichtung an einem Schienenfahrzeug montiert ist, von außen sichtbar sein. In einer anderen Ausführungsform kann der Außenbereich der Aufnahme beispielsweise im montierten Zustand von außen nicht sichtbar und verdeckt sein.

In einer Ausführungsform weist das Gegenlager der Aufnahme des Kabelkanalkörpers einen Anschlag auf, der den Kabelkanaldeckel in dessen geschlossener Position gegen den Außenbereich des Kabelkanalkörpers drückt. Insbesondere weist der Anschlag der Kabelkanalvorrichtung einen Gegenlagerabschnitt auf, der in der geschlossenen Position senkrecht auf den Kabelkanaldeckel drückt. Der Anschlag des Gegenlagers kann entsprechend der erforderlichen Klemmkraft ausgestaltet sein, oder, beispielsweise durch seine Position eine besonders vorteilhafte Kraftausübung auf den Kabelkanaldeckel bewirken. Dadurch kann die Klemmfunktion optimiert werden.

Gemäß einer weiteren Ausführungsform umfasst das Gegenlager eine Dichtkante, um eine innere Dichtung in dem Kabelkanalkörper zwischen dem Kabelkanalkörper und dem Kabelkanaldeckel bereit zu stellen. Die Dichtkante verbessert die Dichtung zwischen dem Kabelkanaldeckel und dem Kabelkanalkörper zur Innenseite oder zum Innern des Kabelkanalkörpers hin. Vorteilhafterweise wird hierbei das Gegenlager verwendet, um die Dichtkante vorzusehen, wodurch das Gegenlager zwei Funktionen vereint, nämlich den Druck auf den Kabelkanaldeckel in Richtung Außenbereich der Kabelkanalvorrichtung auszuüben und die Dichtung zu verbessern.

Nach einer Ausführungsform der hierin beschriebenen Kabelkanalvorrichtung legt der Außenbereich der Aufnahme einen Rand der Kabelkanalöffnung fest, wobei sich das Gegenlager der Aufnahme in einer Richtung über den Rand der Kabelkanalöffnung hinaus erstreckt. Dabei ist der Außenbereich insbesondere weiter außen (vom Kabelkanalkörper aus gesehen) angeordnet, als das Gegenlager. Dies ermöglicht eine einfache und bequeme Verschwenkung des Kabelkanaldeckels und gleichzeitige Einführung des Randbereichs des Kabelkanaldeckels in die Aufnahme. Das einfache und bequeme Einführen trägt zu einer einfachen, und damit kostengünstigen, Montage bei.

Gemäß einer Ausführungsform umfasst der Kabelkanaldeckel einen Abschnitt mit Kröpfung im Randbereich und einen Abschnitt ohne Kröpfung, wobei das Gegenlager in einer geschlossenen Position der Kabelkanalvorrichtung gegen den Abschnitt ohne Kröpfung drückt. Durch die Kröpfung in dem Randbereich des Kabelkanaldeckels entsteht ein im Vergleich zum Abschnitt ohne Kröpfung im Wesentlichen parallel versetzter, ebener Bereich, der zum Beispiel eine zuverlässige Klemmung zwischen Außenbereich und Gegenlager der Aufnahme erlaubt. Zudem kann auf den ebenen Bereich, der durch die Kröpfung entsteht, eine gleichmäßige Kraft auf den Kabelkanaldeckel im Klemmbereich ausgeübt werden. Darüber hinaus bietet der gekröpfte Bereich eine Fläche zum Anbringen einer Dichtung. Außerdem entsteht durch den gekröpften Bereich ein Hinterzug; der Randbereich des Kabelkanaldeckels wird durch den Außenbereich der Aufnahme verdeckt. Dies erlaubt eine verdeckte Befestigung des Kabelkanaldeckels am Kabelkanalkörper zumindest im Klemmbereich. Die äußere Seite der Kabelkanalvorrichtung bildet damit in der Gesamtfläche einen Teil der Schienenfahrzeugkontur.

In einer weiteren Ausführungsform ist im Klemmbereich ein Fanghaken vorgesehen, der an dem Kabelkanaldeckel angebracht ist. Weiterhin ist auch ein Fanghakenfänger vorgesehen, der an dem Gegenlager der Aufnahme ausgebildet ist. Der Fanghaken dient dazu, um bei der Montage und Demontage den Kabelkanaldeckel nach dem Lösen der Fixiermittel oder vor der Befestigung mittels Fixiermittel halten zu können. Der Kabelkanaldeckel wird dabei in einer Normallage gehalten, ohne dass der Kabelkanaldeckel herab fallen könnte. Auch bei der Montage kann dadurch der Kabelkanaldeckel beispielweise zwischendurch am Kabelkanalkörper abgelegt werden, ohne dass der Kabelkanaldeckel verschmutzt oder beschädigt wird.

In einer Ausführungsform der Kabelkanalvorrichtung bildet ein Teil der Aufnahme, insbesondere der Raum zwischen dem Außenbereich des Kabelkanalkörpers und dem Gegenlager der Aufnahme, einen Dichtraum zwischen Kabelkanalkörper und Kabelkanaldeckel. Der Dichtraum verbessert die Dichtung zwischen Kabelkanaldeckel und Kabelkanalkörper und dichtet den Kabelkanalkörper nach innen ab. Vorteilhafterweise wird dabei das Gegenlager der Aufnahme des Kabelkanalkörpers verwendet, um Material und Herstellungskosten zu sparen.

In einer weiteren Ausführungsform der Kabelkanalvorrichtung weist der Randbereich des Kabelkanaldeckels, oder die Aufnahme des Kabelkanalkörpers, eine äußere Dichtung auf, um die Kabelkanalvorrichtung nach außen abzudichten. Insbesondere kann dabei die äußere Dichtung an der durch den gekröpften Abschnitt gebildeten, ebenen Fläche aufliegen. Die äußere Dichtung verbessert die Abdichtung der Kabelkanalvorrichtung nach außen, und bewirkt, insbesondere in Verbindung mit der inneren Dichtung des Gegenlagers, eine zuverlässige und sichere Abdichtung der Kabelkanalvorrichtung. Da die äußere Dichtung sowohl am Kabelkanaldeckel als auch am Außenbereich der Aufnahme vormontiert sein kann, vereinfacht dies auch die Montage der Kabelkanalvorrichtung. Zusammen mit der (oben beschriebenen) inneren Dichtung ist die Kabelkanalvorrichtung doppelt abgedichtet.

Gemäß einer Ausführungsform der hierin beschriebenen Kabelkanalvorrichtung ist das Gegenlager der Aufnahme federnd ausgebildet, um den Kabelkanaldeckel federnd gegen den Außenbereich des Kabelkanalkörpers zu drücken. Dies kann zum Beispiel durch die Wahl eines elastischen Materials für das Gegenlager realisiert werden. Die federnde Gestaltung vereinfacht die Montage, da das Gegenlager zu einem gewissen Grad ausgelenkt werden kann, um den Randbereich des Kabelkanaldeckels in die Aufnahme einzuführen. Nach der Montage erhöht die federnde Gestaltung des Gegenlagers den Druck auf den Kabelkanaldeckel und ermöglicht dabei eine zuverlässige Klemmung und Abdichtung.

In einer weiteren Ausführungsform weist die Kabelkanalvorrichtung im Klemmbereich eine größere Ausdehnung auf, als im Befestigungsbereich in einer zum Kabelkanaldeckel im Wesentlichen senkrechten Richtung, wenn sich die Kabelkanalvorrichtung in der geschlossenen Position befindet. Dabei wird der Einbausituation im seitlichen Außenbereich des Schienenfahrzeugs Rechnung getragen. Die Anpassung an die Kontur der Außenverkleidung des Schienenfahrzeugs zieht dabei eine Anpassung der Abmessungen der Kabelkanalvorrichtung nach sich.

Gemäß einer Ausführungsform wird eine Befestigungsvorrichtung vorgesehen, um die Kabelkanalvorrichtung am Schienenfahrzeug zu befestigen. Insbesondere befindet sich die Befestigungsvorrichtung an einer der Kabelkanalöffnung gegenüberliegenden Seite. Dabei kann der Klemmbereich mit der versteckten Klemmung des Kabelkanaldeckels als Teil der Außenverkleidung des Schienenfahrzeugs dienen, während die Befestigung der Kabelkanalvorrichtung an das Schienenfahrzeug an einer anderen (insbesondere verdeckten, nicht nach außen sichtbaren) Seite erfolgt.

In einer Ausführungsform weist der Kabelkanalkörper Stabilisierungselemente auf, die insbesondere in der geschlossenen Position der Kabelkanalvorrichtung bis an den Kabelkanaldeckel reichen. Dadurch können die Stabilisierungselemente den Druck auf den Kabelkanaldeckel nach außen erhöhen und damit die Position des Kabelkanaldeckels und die Klemmwirkung in der Aufnahme verbessern. Auf der anderen Seite können diese Stabilisierungselemente, ähnlich dem Gegenlager, mit Dichtkanten versehen sein, und dadurch die Abdichtung innerhalb des Kabelkanalkörpers verbessern. In einem Beispiel sind die Stabilisierungselemente als im Wesentlichen waagerechte Bleche ausgebildet.

In einer Ausführungsform der Kabelkanalvorrichtung ist der Kabelkanaldeckel als Teil der Außenverkleidung eines Schienenfahrzeugs ausgebildet, insbesondere dadurch, dass der Kabelkanaldeckel die Kontur der Außenverkleidung des Schienenfahrzeugs weiterführt oder der Kabelkanaldeckel als ein Teil der Kontur der Außenverkleidung ausgebildet ist. Dies ermöglicht eine seitliche Montage der Kabelkanalvorrichtung am Schienenfahrzeug und bietet ein ansprechendes Äußeres des Schienenfahrzeugs.

Gemäß weiteren Ausführungsformen wird ein Schienenfahrzeug mit einer Kabelkanalvorrichtung nach hierin beschriebenen Ausführungsformen bereitgestellt. Insbesondere umfasst das Schienenfahrzeug eine Außenverkleidung, wobei der Kabelkanaldeckel einen Teil der Außenverkleidung des Schienenfahrzeugs bildet. Zum Beispiel kann der Kabelkanaldeckel die Kontur der Außenverkleidung des Schienenfahrzeugs weiterführen. Dabei kann der Einbauraum an der Außenseite des Schienenfahrzeugs vorteilhafterweise für eine Kabelkanalvorrichtung genutzt werden. Gleichzeitig ist eine unauffällige Bereitstellung der Kabelkanalvorrichtung möglich und bietet ein ansprechendes Design des Schienenfahrzeugs.

In einer Ausführungsform des Schienenfahrzeugs umfasst das Schienenfahrzeug weiterhin einen Wagenkasten, wobei die Kabelkanalvorrichtung seitlich am Wagenkasten befestigt ist. Vorhandener Einbauraum kann durch die Gestaltung der Kabelkanalvorrichtung optimiert ausgenutzt werden. Insbesondere wird die Einbausituation Unterflur am Wagenkasten dadurch entspannt, dass die Kabelkanalvorrichtung seitlich verläuft und damit keinen Platz unterhalb des Wagenkastens benötigt.

Gemäß einer Ausführungsform wird ein Verfahren zum Montieren einer Kabelkanalvorrichtung bereitgestellt. Das Verfahren umfasst Befestigen eines Kabelkanalkörpers an dem Wagenkasten eines Schienenfahrzeugs; Einlegen eines Randbereichs eines Kabelkanaldeckels in eine Aufnahme des Kabelkanalkörpers; Verschwenken des Kabelkanaldeckels in der Aufnahme bis der Kabelkanaldeckel in der Aufnahme des Kabelkanalkörpers klemmt und der Kabelkanaldeckel den Kabelkanalkörper in einem Klemmbereich der Kabelkanalvorrichtung verschließt; und lösbares Fixieren des Kabelkanaldeckels in einem Befestigungsbereich der Kabelkanalvorrichtung mit Fixiermitteln.

Die beschriebene Kabelkanalvorrichtung nach Ausführungsformen der Erfindung kann in Schienenfahrzeugen, aber auch in anderen Fahrzeugen verwendet werden.

Insbesondere kann die Kabelkanalvorrichtung nach hierin beschriebenen Ausführungsformen in allen Einbauräumen verwendet werden, insbesondere Einbauräume, welche seitlich zugänglich sind.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Figur 1a zeigt eine Kabelkanalvorrichtung in einer geschlossenen Position gemäß einer Ausführungsform.
Figur 1b zeigt eine vergrößerte Ansicht des Bereichs A der in Figur 1a gezeigten Kabelkanalvorrichtung.
Figur 1c zeigt eine vergrößerte Ansicht des Bereichs B der in Figur 1a gezeigten Kabelkanalvorrichtung.
Figur 2 zeigt eine Perspektivansicht einer Kabelkanalvorrichtung gemäß Ausführungsformen.
Figuren 3a bis 3c zeigen eine Kabelkanalvorrichtung in unterschiedlichen Montagepositionen.

### Ausführungsbeispiele

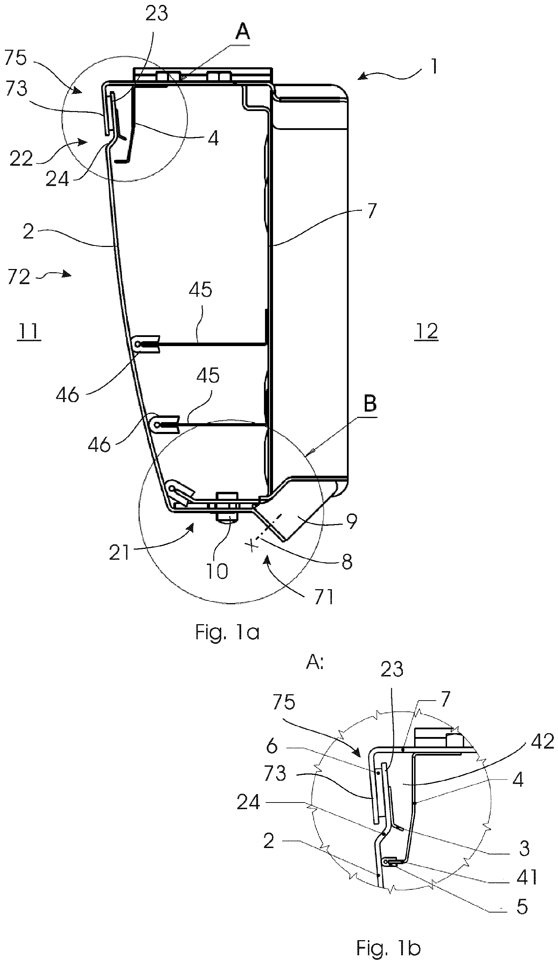

Figur 1a zeigt eine Ausführungsform der Kabelkanalvorrichtung in einer geschlossenen, zum Beispiel montierten, Position. Die Kabelkanalvorrichtung 1 umfasst einen Kabelkanalkörper 7 und einen Kabelkanaldeckel 2. An einer Seite, die auch Befestigungsbereich 21, 71 genannt wird, ist der Kabelkanaldeckel 2 an dem Kabelkanalkörper 7 fixiert. Zum Beispiel weist die Kabelkanalvorrichtung 1 eine Schraublagerung 9 auf. Der Kabelkanaldeckel 2 ist in der geschlossenen Position in der Schraublagerung 9 mittels Fixierelement 8, z.B. einer Schraube 8, befestigt.

An einer anderen Seite der Kabelkanalvorrichtung 1, die auch Klemmbereich 22 oder 72 genannt wird, ist ein Randbereich 23 des Kabelkanaldeckels 2 in eine Aufnahme 75 des Kabelkanalkörpers 7 gesteckt und dort festgeklemmt. Die Aufnahme 75 umfasst in der in Figur 1a gezeigten Ausführungsform einen Außenbereich 73 des Kabelkanalkörpers 7 und ein Gegenlager 4, das in dem Kabelkanalkörper 7 angeordnet ist. Zum Beispiel zeigt Figur 1a, dass das Gegenlager 4 als Profilblech an der Innenseite des Kabelkanalkörpers angebracht ist. Der obere Randbereich des Kabelkanaldeckels 2 ist zwischen den Außenbereich 73 und das Gegenlager 4 geklemmt.

Die in Figur 1a gezeigte Kabelkanalvorrichtung 1 ist seitlich durch den Kabelkanaldeckel 2 verschließbar. Zum Beispiel kann der Kabelkanaldeckel 2 als Teil der Außenverkleidung des Schienenfahrzeugs ausgebildet sein. In dem in den Figuren gezeigten Beispiel, führt der Kabelkanaldeckel 2 die Kontur der Außenverkleidung des Schienenfahrzeugs fort. Auch der Außenbereich 73 des Kabelkanalkörpers 7 ist in dem gezeigten Beispiel von außen sichtbar und bildet zusammen mit dem Kabelkanaldeckel 2 einen Teil der Außenverkleidung des Schienenfahrzeugs, an dem die Kabelkanalvorrichtung montiert ist. Die Figur 1a zeigt außerdem eine Entwässerungsdiode 10 zum Entwässern des Kabelkanals.

Stabilierungselemente 45 erstrecken sich in dem Kabelkanalkörper 7 in Richtung zum Kabelkanaldeckel 2, um einerseits die Kabelkanalvorrichtung zu stabilisieren und eine Unterteilung des Kabalkanalvolumens zu erlauben und um andererseits Dichtungen 46 zwischen dem Kabelkanaldeckel 2 und dem Kabelkanalkörper 7 bereit zu stellen.

Figur 1b zeigt den Ausschnitt A der Figur 1a in einer vergrößerten Ansicht. In dieser Darstellung kann die Aufnahme 75 und die Ausgestaltung des Kabelkanaldeckels 2 im Detail gesehen werden. Die Aufnahme 75 umfasst einen Außenbereich 73 und ein Gegenlager 4, welches den Randbereich 23 des Kabelkanaldeckels 2 an den Außenbereich 73 drückt und den Randbereich 23 des Kabelkanaldeckels 2 in die Aufnahme 75 klemmt. Der Randbereich 23 des Kabelkanaldeckels 2, der in die Aufnahme 75 eingelegt wird, umfasst einen gekröpften Bereich 24. Der gekröpfte Bereich 24 erlaubt, dass der Randbereich 23 des Kabelkanaldeckels 2 hinter dem Außenbereich 73 des Kabelkanalkörpers 7 verdeckt befestigt wird. Außerdem wird durch die Kröpfung eine ebene, zum Rest des Kabelkanaldeckels 2 im Wesentlichen parallele Fläche des Randbereichs 23 zur Verfügung gestellt. Diese ebene Fläche bietet eine Auflage für die äußere Dichtung 6 zwischen Außenbereich 73 des Kabelkanalkörpers 7 und dem Randbereich 23 des Kabelkanaldeckels 2. Typischerweise ist die äußere Dichtung eine Flachdichtung. Die äußere Dichtung 6 selbst kann vormontiert mit dem Kabelkanaldeckel oder dem Kabelkanalkörper geliefert werden. Die äußere Dichtung 6 erlaubt dabei, das Eindringen von Schmutz und Wasser in das Kabelkanalkörperinnere zu verhindern. Außerdem trägt die Kröpfung dazu bei, dass zum Beispiel Fließwasser oder Schmutz an der Außenseite 11 der Kabelkanalvorrichtung 1 ablaufen kann, ohne in den Kabelkanalkörper 7 einzudringen.

Das Gegenlager 4 der Aufnahme 75 weist einen Anschlag 41 mit einer Dichtkante 5 auf, die eine innere Dichtung für die Kabelkanalvorrichtung 1 zur Verfügung stellt, insbesondere eine Dichtung im Innern des Kabelkanalkörpers 7. In der in Figur 1b gezeigten Ausführungsform ist der Anschlag in der geschlossenen Position der Kabelkanalvorrichtung im Wesentlichen senkrecht zum Kabelkanaldeckel 2.

Durch das Gegenlager 4 mit der Dichtkante 5, die in der geschlossenen Position gegen den Kabelkanaldeckel 2 drückt, entsteht ein Dichtraum 42 zwischen dem Kabelkanalkörper 7 und Kabelkanaldeckel 2, der beispielsweise ein Dichtlabyrinth darstellt. In diesem Dichtraum kann eventuell eingetretener Schmutz oder Wasser gesammelt und von den im Kabelkanalkörper befindlichen Kabeln fern gehalten werden. In dem in der Figur 1b gezeigten Ausführungsbeispiel wird das Gegenlager 4 von einem Profilblech gebildet, das entsprechend geformt an der Innenseite des Kabelkanalkörpers 7 angebracht ist. Dabei weist das Profilblech einen Abschnitt auf, der in Kontakt mit einer Wand des Kabelkanalkörpers steht, um das Profilblech daran zu befestigen.

Die Figur 1b zeigt außerdem noch einen Fanghaken 3, der an dem Randbereich 23 des Kabelkanaldeckels 2 angebracht ist. Figur 1b zeigt, dass der Fanghaken 3 an dem ebenen, durch die Kröpfung entstandenen Abschnitt des Randbereichs 23 des Kabelkanaldeckels 2 angebracht ist. Der Fanghaken 3 besteht in der gezeigten Ausführungsform aus einem Abschnitt, der entlang des Kabelkanaldeckels 2 läuft, um den Fanghaken 3 an diesem befestigen zu können. Zusätzlich weist der Fanghaken 3 einen Abschnitt auf, der sich von dem Kabelkanaldeckel 2 weg erstreckt und in Richtung des Kabelkanalkörpers hervorsteht. Der Fanghaken 3 hat eine Ausdehnung in Richtung des Kabelkanalkörpers 7, so dass der Fanghaken 3 an dem Gegenlager 4 des Kabelkanalkörpers 7 hängen bleibt, wenn der Kabelkanaldeckel 2 im Wesentlichen vertikal nach unten bewegt wird, wie später noch detailliert erklärt werden wird.

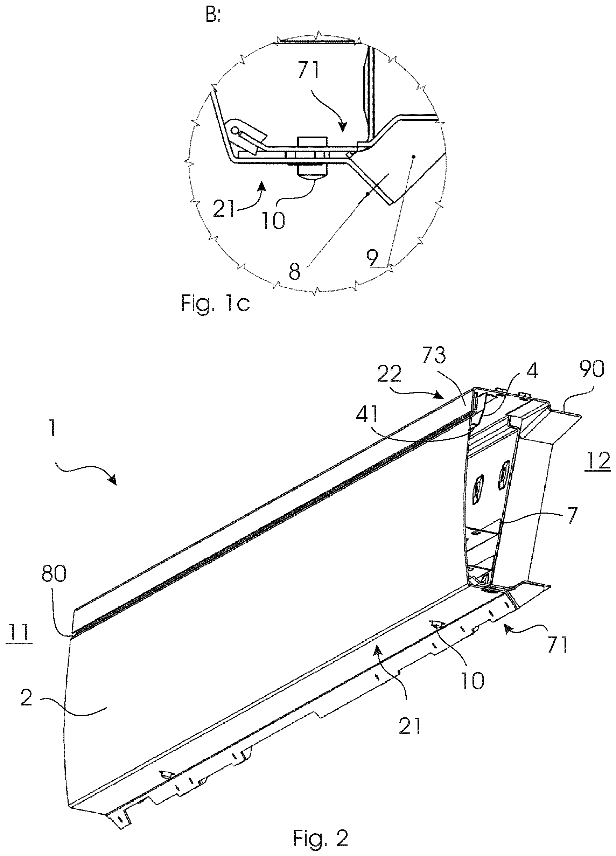

Figur 1c zeigt den Ausschnitt B der Figur 1a in einer vergrößerten Ansicht. Dabei kann man das Schraublager 9 und die Schraube 8 sehen, mit der der Kabelkanaldeckel 2 an dem Kabelkanalkörper 7 im Befestigungsbereich 71, 21 befestigt ist. Die Entwässunrungsdiode 10 ist unten am der Kabelkanalvorrichtung 1 angebracht und erlaubt eventuell eingetretenes Wasser aus der Kabelkanalvorrichtung 1 zu entfernen. In dem gezeigten Beispiel der Kabelkanalvorrichtung ist der Befestigungsbereich 21, 71 auch unten an der Kabelkanalvorrichtung angebracht, zum Beispiel, um eine gute Erreichbarkeit des Fixiermittels 8, oder der Schraube 8, zu gewährleitsen. Wie man in der Figur 1a sehen konnte, ist die Kabelkanalvorrichtung 1 seitlich an einer Seite verschließbar, während die gegenüberliegende Seite (in Richtung des Fahrzeuginneren 12) der Befestigung am Schienenfahrzeug dient. Daher ist ein Fixiermittel unten an der Kabelkanalvorrichtung 1 leicht zugänglich und leicht zu montieren.

Figur 2 zeigt eine Perspektivansicht der Kabelkanalvorrichtung 1 nach Ausführungsformen der Erfindung in einer geschlossenen Position. Während die Figuren 1a, 1b und 1c einen Querschnitt der Kabelkanalvorrichtung gezeigt haben, zeigt die Figur 2 die Ausdehnung der Kabelkanalvorrichtung 1, zum Beispiel in Fahrzeuglängsachse. Durch die Ausdehnung der Kabelkanalvorrichtung 1 in Längsachse kann man erkennen, dass die Kabelkanalvorrichtung 1 mehrere Fixierelemente, wie zum Beispiel Schrauben, zum Befestigen des Kabelkanaldeckes 2 am Kabelkanalkörper im Befestigungsbereich 21, 71 aufweist. Auch sind, je nach Länge, mehrere Entwässerungsdioden 10 für die Kabelkanalvorrichtung 1 vorgesehen. Die Figur 2 zeigt dabei eine Kabelkanalvorrichtung 1, die mit anderen Kabelkanalvorrichtungen in Längsrichtung verbunden werden kann, um einen seitlichen Kabelkanal entlang der benötigten Länge am Schienenfahrzeug vorsehen zu können. Zum Beispiel kann die Kabelkanalvorrichtung 1 zu diesem Zweck mit Verbindungselementen ausgestattet sein, um mehrere Kabelkanalvorrichtungen in Längsrichtung miteinander verbinden zu können. Wie auch in den Querschnitten der Figuren 1a, 1b, und 1c zu sehen ist, weist der Kabelkanalkörper oben eine größere Ausdehnung in Richtung senkrecht zum Kabelkanaldeckel auf als unten. Die Kabelkanalvorrichtung 1 ist somit sowohl an die Einbausituation und den vorhandenen Einbauraum seitlich am Schienenfahrzeug als auch an die Außenkontur angepasst. Die Perspektivansicht der Figur 2 ziegt auch die Stabilierungselemente 45, die den Kabelkanalkörper 7 stabilisieren und unterteilen.

Figur 2 zeigt den zur Außenseite 11 des Schienenfahrzeugs weisenden Kabelkanaldeckel 2. Der Kabelkanaldeckel 2 ist dabei ausgeformt, um einen Teil der Außenverkleidung des Schienenfahrzeugs zu bilden. Auch der Außenbereich 73 ist in der gezeigten Ausführungsform von außen sichtbar und bildet einen Teil der Außenverkleidung des Schienenfahrzeugs. Durch die Ausgestaltung der Kabelkanalvorrichtung 1 mit dem Außenbereich 73 und der Kröpfung des Randbereiches des Kabelkanaldeckels 2, wie oben detailliert beschrieben, ist es möglich, eine Einstellung des Spaltmaßes an der Außenverkleidung des Schienenfahrezeugs auf einfache Weise vorzunehmen und damit einen Ausgleich für eventuell auftretende Maßtoleranzen anzubieten. Die Figur 2 zeigt den Spalt 80, dessen Maß angepasst werden kann. Im Rückbezug zur Figur 1b sieht man, dass durch eine einfache Verschiebung des Kabelkanaldeckels nach oben, oder anders ausgedrückt, durch ein weiteres Einführen des Randbereichs 23 des Kabelkanaldeckels 2 in die Aufnahme 75 eine Einstellung des Spaltes zwischen Außenbereich 73 und Kabelkanaldeckel 2 möglich ist. Dies ist insbesondere vorteilhaft, wenn der Kabelkanaldeckel als Teil der Außenkontur des Schienenfahrzeugs ausgebildet werden soll.

Die Figur 2 zeigt außerdem Befestigungsmittel 90 an der der Kabelkanalöffnung 76 gegenüberliegnden Seite, um die Kabelkanalvorrichtung 1 am Schienenfahrzeug befestigen zu können. Insbesondere kann die Kabelkanalvorrichtung damit an einer enstprechenden Aufnahme am Untergestell des Schienenfahrzeugs befestigt werden.

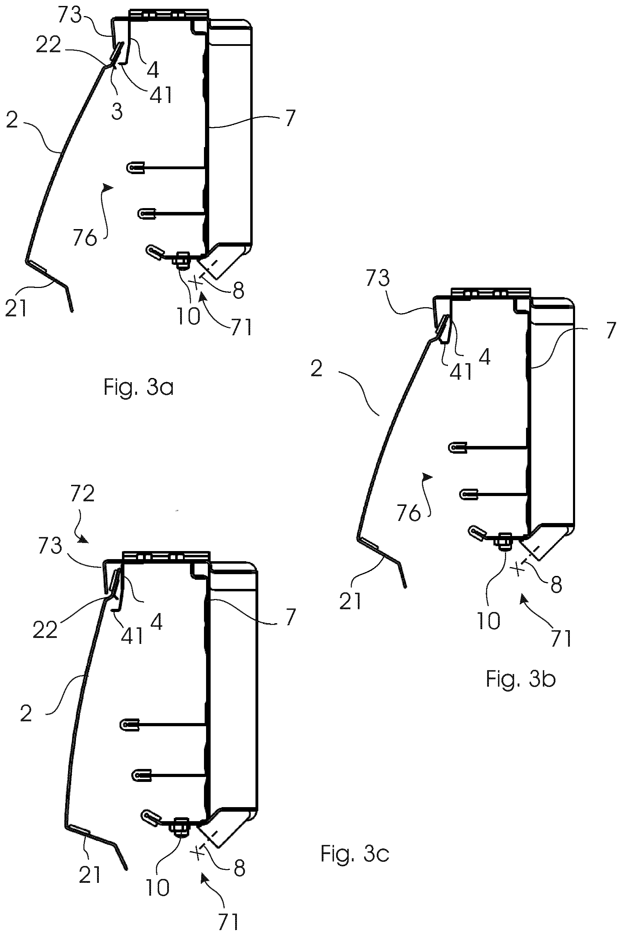

Die Figuren 3a bis 3c zeigen die Kabelkanalvorrichtung in verschiedenen Montagesituationen. Figur 3a zeigt einen ersten Schritt, in dem der Randbereich 23 des Kabelkanaldeckels 2 von unten in die Aufnahme 75 teilweise eingeführt wird. Der Randbereich 23 des Kabelkanaldeckels 2 stellt vormontiert die äußere Dichtung 6 zur Verfügung. Durch die Ausgestaltung des Anschlags 41 des Gegenlagers 4 und den Außenbereich 73 des Kabelkanalkörpers 7 wird der Kabelkanaldeckel 2 zum Einführen in die Aufnahme 75 gekippt, bzw. geschwenkt. Insbesondere sieht man in der Figur 3a, dass sich das Gegenlager 4 mit dem Anschlag 41 weiter nach unten erstreckt, als der Außenbereich 73 des Kabelkanalkörpers 7. Mit anderen Worten bildet der Außenbereich 73 den Rand der Kabalkanalöffnung 76 des Kabelkanalkörpers 7, die mit dem Kabkelkanaldeckel 2 verschlossen werden soll, wobei sich das Gegenlager 4 über den Rand der Kabelkanalöffnung hinaus erstreckt und in die Kabelkanalöffnung 76 hineinragt. Das Gegenlager 4 reicht soweit in die Kabelkanalöffnung 76 hinein, dass es in der geschlossenen Position von dem Kabelkanaldeckel 2 verdeckt wird (siehe auch Figur 1a).

Figur 3b zeigt die Montagesituation nach einer weiteren Schwenkung des Kabelkanaldeckels 2 in Richtung des Kabelkanalkörpers 7. Der Fanghaken 3 wird durch die Schwenkung des Kabelkanaldeckels 2 an dem Gegenlager 4, insbesondere an dem Anschlag 41 des Gegenlagers 4, vorbei geführt. Während der weiteren Schwenkbewegung in Richtung des Kabelkanalkörpers 7 wird der Kabelkanaldeckel 2 weiter nach oben in die Aufnahme 75 geschoben. Die Gestaltung der Aufnahme, insbesondere die unterschiedlichen Dimensionen des Außenbereich 73 und des Gegenlagers 4 in im Wesentlichen vertikaler Richtung, ermöglicht ein bequemes Einführen des Randbereichs 23 des Kabelkanaldeckels 2 in die Aufnahme 75. Da der Kabelkanaldeckel 2 von der Außenseite 11 des Schienenfahrzeugs montiert wird, ist ausreichend Platz für die Verschwenkung des Kabelkanaldeckels 2 vorhanden so dass dieser quasi frei ausschwenkbar ist.

Figur 3c zeigt eine dritte Montagesituation, in der der Kabelkanaldeckel 2 so weit in Richtung des Kabelkanalkörpers 7 verschwenkt wurde, dass der Fanghaken 3 den Anschlag 41 des Gegenlagers 4 passiert hat und sich der Randbereich 23 des Kabelkanaldeckels fast vollständig in der Aufnahme 75 befindet. Im Folgenden wird der Kabelkanaldeckel 2 noch weiter in Richutng des Kabelkanalkörpers 7, oder der Fahrzeuginnenseite 12, verschwenkt, bis der Kabelkanaldeckel in Kontakt mit dem Anschlag 41 des Gegenlagers 4 und mit den Stabilisierungselementen 45 tritt. In dieser Position befindet sich der Kabelkanaldeckel 2 in einer im Wesentlichen vertikalen Position und der Randbereich 23 des Kabelkanaldeckels 2 ist in die Aufnahme 75 geklemmt (siehe Figur 1a). Daraufhin kann das Fixiermittel 8 im Befestigungsbereich 21, 71 den Kabelkanaldeckel 2 am Kabelkanalkörper 7 festlegen, bzw. befestigen.

In der Figur 3c kann man sehen, wie der Fanghaken 3 im Falle einer Öffnung des Fixiermittels 8 am Anschlag 41 des Gegenlagers 4 gehalten wird. Der Anschlag 41 des Gegenlagers 4 kann daher auch als Fanghakenfänger beschrieben werden. Damit wird verhindert, dass der Kabelkanaldeckel nach dem Lösen der Fixiermittel vollständig vom Kabelkanalkörper abfällt. Auch kann der Kabelkanaldeckel durch die Fanghakenfunktion während der Montage einfach und unkompliziert abgelegt werden, ohne dass der Kabelkanaldeckel verschmutzt oder beschädigt wird.

Die oben beschriebene Kabelkanalvorrichtung bietet eine sichere Leitungsführung bzw. Abdeckung, insbesondere im Drehgestellbereich in der elektrischen Leitungsverlegung, zum Beispiel bei der Verlegung von Steuer- und Signalleitungen. Die Verlegung einer Kabelkanalvorrichtung im Schienenfahrzeug nach Ausführungsformen der Erfindung ist typischerweise wintertauglich und steinschlaggeschützt gestaltet.

Durch den stark begrenzten Einbauraum für die Leitungsverlegung Unterflur am Schienenfahrzeug ist es vorteilhaft, im Querschnitt nicht belegte Flächen, bei denen die Möglichkeit besteht, über das Drehgestell zu gelangen, zu nutzen. Die oben beschriebenen Ausführungsformen der Kabelkanalvorrichtung bietet eine solche Möglichkeit. Somit können auch Kabelkanalbaugruppen seitlich am Fahrzeug an der Außenfläche realisiert werden, wobei die Zugänglichkeit am Fahrzeug selbst seitlich gegeben ist. Zudem ist es mit der Kabelkanalvorrichtung gemäß Ausführungsformen der Erfindung auch möglich, den Kabelkanaldeckel mit Kanal gleichzeitig als Drehgestellverblendung zu nutzen.

Durch die erfindungsgemäße Anordnung der Kabelkanalvorrichtung kann der Kabelkanaldeckel entsprechend dekorativ gestaltet werden und mit der nicht sichtbaren Befestigungen fixiert werden, so dass zum Beispiel nur eine minimale Lichtkante auf der Fahrzeugoberfläche bestehen bleibt.

Insbesondere kann die Kabelkanalvorrichtung nach Ausführungsformen der Erfindung seitlich am Drehgestell vorbei verlaufen. Auch die designtechnische Forderung, an der Außenoberfläche des Zuges keine zusätzlichen Befestigungen zu haben, ist durch die versteckte Klemmbefestigung des Kabelkanaldeckels erfüllt. Zudem kann durch den zusätzlichen Dichtraum durch das Gegenlager eine Doppelfunktion ausgeführt werden, nämlich den Deckel zu klemmen und gleichzeitig zu dichten. Somit bestehen insbesondere zwei große Vorteile gegenüber einer einfachen, beidseitigen Befestigung. Die Vereinigung mehrerer Funktionen, wie Dichten und Klemmen, und gleichzeitig ein halbierter Aufwand bei der Montage der Befestigung des Kabelkanaldeckels. Ein zusätzlicher Vorteil ergibt sich aus dem Fanghaken, welcher in der senkrechten Lage des Kabelkanaldeckels ein Abrutschen nach Unten verhindert.

### Bezugszeichenliste

- 1: Kabelkanalvorrichtung
- 2: Kabelkanaldeckel
- 3: Fanghaken
- 4: Gegenlager
- 5: Dichtkante
- 6: Dichtung
- 7: Kabelkanalkörper
- 8: Fixierungsvorrichtung
- 9: Lager für Fixierungsvorrichtung
- 10: Entwässerungsdiode
- 11: Außenseite des Schienenfahrzeugs
- 12: Innenseite des Schienenfahrzeugs
- 21: Befestigungsbereich der Kabelkanalvorrichtung
- 22: Klemmbereich der Kabelkanalvorrichtung
- 23: Randbereich des Kabelkanaldeckels
- 24: Kröpfung des Kabelkanaldeckels
- 41: Abschnitt des Gegenlagers; Fanghakenfänger
- 42: Dichtraum
- 45: Stabilisierungselemente
- 46: Dichtungen
- 71: Befestigungsbereich der Kabelkanalvorrichtung
- 72: Klemmbereich der Kabelkanalvorrichtung
- 73: Außenbereich des Kabelkanalkörpers
- 75: Aufnahme
- 76: Kabelkanalöffnung
- 80: Spalt
- 90: Befestigungsmittel

## Patentansprüche

1. Kabelkanalvorrichtung (1) für ein Schienenfahrzeug, aufweisend:
einen Kabelkanalkörper (7) mit einer Kabelkanalöffnung (76) und einem Kabelkanaldeckel (2) zum Verschließen der Kabelkanalöffnung (76),
wobei der Kabelkanalkörper (7) einen Klemmbereich (22; 72) mit einer Aufnahme (75) für einen Randbereich (23) des Kabelkanaldeckels (2) aufweist, in die der Randbereich (23) des Kabelkanaldeckels (2) einsteckbar ist und die als Schwenklager zum Verschwenken des Kabelkanaldeckels (2) relativ zum Kabelkanalkörper (7) ausgebildet ist, und einen Befestigungsbereich (21; 71) mit einem Fixiermittel (8) zum lösbaren Fixieren des Kabelkanaldeckels (2) am Kabelkanalkörper (7) aufweist, wobei die Kabelkanalöffnung (76) zwischen dem Befestigungsbereich (21; 71) und dem Klemmbereich (22; 72) angeordnet ist; und
wobei zum Verschließen der Kabelkanalöffnung (76) durch Verschwenken des Kabelkanaldeckels (2) relativ zum Kabelkanalkörper (7) der in der Aufnahme des Kabelkanalkörpers (7) eingesteckte Randbereich (23) des Kabelkanaldeckels (2) in der Aufnahme (75) des Kabelkanalkörpers (7) verklemmbar ist und das Fixiermittel (8) den Kabelkanaldeckel (2) in dessen geschlossener Position hält,
wobei die Aufnahme (75) durch einen Außenbereich (73) des Kabelkanalkörpers (7) und ein Gegenlager (4) gebildet ist, und wobei sich das Gegenlager (4) der Aufnahme (75) im Kabelkanalkörper (7) befindet,
wobei bei eingestecktem Randbereich (23) des Kabelkanaldeckels (2) in der Aufnahme (75) das Gegenlager (4) den Kabelkanaldeckel (2) an den Außenbereich der Aufnahme (75) drückt und dadurch eine Klemmkraft auf den Randbereich (23) des Kabelkanaldeckels (2) ausübt.

2. Kabelkanalvorrichtung nach Anspruch 1, wobei das Gegenlager (4) der Aufnahme (75) im Kabelkanalkörper (7) an der Innenseite des Kabelkanalkörpers (7) befestigt ist.

3. Kabelkanalvorrichtung nach Anspruch 2, wobei das Gegenlager (4) der Aufnahme (75) des Kabelkanalkörpers (7) einen Anschlag (41) aufweist, der den Kabelkanaldeckel (2) in dessen geschlossener Position gegen den Außenbereich (73) des Kabelkanalkörpers (7) drückt, wobei der Anschlag (41) insbesondere einen Abschnitt aufweist, der in der geschlossenen Position senkrecht auf den Kabelkanaldeckel (2) drückt.

4. Kabelkanalvorrichtung nach Anspruch 2 oder 3, wobei das Gegenlager (4) eine Dichtkante (5) aufweist, um eine innere Dichtung in dem Kabelkanalkörper (7) zwischen dem Kabelkanalkörper (7) und dem Kabelkanaldeckel (2) bereit zu stellen.

5. Kabelkanalvorrichtung nach einem der Ansprüche 2 bis 4, wobei der Außenbereich (73) der Aufnahme (75) einen Rand der Kabelkanalöffnung festlegt und wobei sich das Gegenlager (4) der Aufnahme (75) in einer Richtung über den Rand der Kabelkanalöffnung (76) hinaus erstreckt.

6. Kabelkanalvorrichtung nach einem der Ansprüche 2 bis 5, wobei der Kabelkanaldeckel (2) einen Abschnitt (24) mit Kröpfung im Randbereich (23) und einen Abschnitt ohne Kröpfung aufweist und wobei das Gegenlager (4) in einer geschlossenen Position der Kabelkanalvorrichtung gegen den Abschnitt ohne Kröpfung drückt.

7. Kabelkanalvorrichtung nach einem der Ansprüche 2 bis 6, weiterhin aufweisend einen Fanghaken (3) im Klemmbereich (22; 72), der an dem Kabelkanaldeckel (2) angebracht ist, und weiterhin aufweisend einen Fanghakenfänger (41), der an dem Gegenlager (4) der Aufnahme (75) ausgebildet ist.

8. Kabelkanalvorrichtung nach einem der vorhergehenden Ansprüche, wobei ein Teil der Aufnahme (75), insbesondere der Raum zwischen dem Außenbereich (73) des Kabelkanalkörpers (7) und dem Gegenlager (4) der Aufnahme (75), einen Dichtraum (42) zwischen Kabelkanalkörper (7) und Kabelkanaldeckel (2) bildet, und/oder wobei der Randbereich (23) des Kabelkanaldeckels (2) oder die Aufnahme (75) des Kabelkanalkörpers (7) eine äußere Dichtung (6) aufweist, um die Kabelkanalvorrichtung (2) nach außen abzudichten.

9. Kabelkanalvorrichtung nach einem der Ansprüche 2 bis 8, wobei das Gegenlager (4) der Aufnahme (75) federnd ausgebildet ist, um den Kabelkanaldeckel (2) federnd gegen den Außenbereich (73) des Kabelkanalkörpers (7) zu drücken.

10. Kabelkanalvorrichtung nach einem der vorangehenden Ansprüche, wobei die Kabelkanalvorrichtung (1) im Klemmbereich (22; 72) eine größere Ausdehnung aufweist, als im Befestigungsbereich (21; 71) in einer zum Kabelkanaldeckel (2) im Wesentlichen senkrechten Richtung, wenn sich die Kabelkanalvorrichtung (1) in der geschlossenen Position befindet.

11. Die Kabelkanalvorrichtung nach einem der vorangehenden Ansprüche, weiterhin aufweisend eine Befestigungsvorrichtung (90), um die Kabelkanalvorrichtung (1) an einem Schienenfahrzeug zu befestigen, wobei die Befestigungsvorrichtung (90) insbesondere an einer der Kabelkanalöffnung (76) gegenüberliegenden Seite bereitgestellt ist.

12. Schienenfahrzeug mit einer Kabelkanalvorrichtung (1) nach einem der vorangehenden Ansprüche.

13. Schienenfahrzeug nach Anspruch 12, wobei das Schienenfahrzeug eine Außenverkleidung aufweist und der Kabelkanaldeckel (2) einen Teil der Außenverkleidung des Schienenfahrzeugs bildet.

14. Schienenfahrzeug nach einem der Ansprüche 12 oder 13, weiterhin aufweisend einen Wagenkasten, wobei die Kabelkanalvorrichtung (1) seitlich am Wagenkasten befestigt ist.

15. Verfahren zum Montieren einer Kabelkanalvorrichtung (1) an einem Schienenfahrzeug, aufweisend:
Befestigen eines Kabelkanalkörpers (7) an einem Wagenkasten eines Schienenfahrzeugs;
Einlegen eines Randbereichs (23) eines Kabelkanaldeckels (2) in eine Aufnahme (75) des Kabelkanalkörpers (7);
Verschwenken des Kabelkanaldeckels (2) in der Aufnahme (75) bis der Kabelkanaldeckel (2) in der Aufnahme (75) des Kabelkanalkörpers (7) klemmt und der Kabelkanaldeckel (2) den Kabelkanalkörper (7) in einem Klemmbereich (22; 72) der Kabelkanalvorrichtung (1) verschließt wobei die Aufnahme (75) durch einen Außenbereich (73) des Kabelkanalkörpers (7) und ein Gegenlager (4) gebildet ist, und wobei sich das Gegenlager (4) der Aufnahme (75) im Kabelkanalkörper (7) befindet, und wobei bei eingestecktem Randbereich (23) des Kabelkanaldeckels (2) in der Aufnahme (75) das Gegenlager (4) den Kabelkanaldeckel (2) an den Außenbereich der Aufnahme (75) drückt und dadurch eine Klemmkraft auf den Randbereich (23) des Kabelkanaldeckels (2) ausübt; und
lösbares Fixieren des Kabelkanaldeckels (2) in einem Befestigungsbereich (21; 71) der Kabelkanalvorrichtung (1) mit einem Fixiermittel (8).

## Claims

1. Cable duct device (1) for a railway vehicle, comprising:
a cable duct body (7) having a cable duct opening (76) and a cable duct cover (2) for closing the cable duct opening (76),
wherein the cable duct body (7) has a clamping region (22; 72) with a receptacle (75) for an edge region (23) of the cable duct cover (2), into which the receptacle the edge region (23) of the cable duct cover (2) can be inserted and which is configured as a pivot bearing for pivoting the cable duct cover (2) relative to the cable duct body (7), and a fastening region (21; 71) with a fixing means (8) for releasably fixing the cable duct cover (2) to the cable duct body (7), wherein the cable duct opening (76) is arranged between the fixing region (21; 71) and the clamping region (22; 72); and
wherein for closing the cable duct opening (76) by pivoting the cable duct cover (2) relative to the cable duct body (7), the edge region (23) of the cable duct cover (2) inserted in the receptacle of the cable duct body (7) can be clamped in the receptacle (75) of the cable duct body (7) and the fixing means (8) holds the cable duct cover (2) in its closed position,
wherein the receptacle (75) is formed by an outer region (73) of the cable duct body (7) and a counter bearing (4), and wherein the counter bearing (4) of the receptacle (75) is located in the cable duct body (7),
wherein, when the edge region (23) of the cable duct cover (2) is inserted in the receptacle (75), the counter-bearing (4) presses the cable duct cover (2) against the outer region of the receptacle (75) and thereby exerts a clamping force on the edge region (23) of the cable duct cover (2).

2. Cable duct device according to claim 1, wherein the counter bearing (4) of the receptacle (75) in the cable duct body (7) is fixed to the inside of the cable duct body (7).

3. Cable duct device according to claim 2, wherein the counter bearing (4) of the receptacle (75) of the cable duct body (7) has a stop (41) which presses the cable duct cover (2) in its closed position against the outer region (73) of the cable duct body (7), wherein the stop (41) has in particular a portion which in the closed position presses perpendicularly on the cable duct cover (2).

4. Cable duct device according to claim 2 or 3, wherein the counter bearing (4) has a sealing edge (5) to provide an internal seal in the cable duct body (7) between the cable duct body (7) and the cable duct cover (2).

5. Cable duct device according to any one of claims 2 to 4, wherein the outer portion (73) of the receptacle (75) defines an edge of the cable duct opening and wherein the counter bearing (4) of the receptacle (75) extends in a direction beyond the edge of the cable duct opening (76).

6. Cable duct device according to one of claims 2 to 5, wherein the cable duct cover (2) has a portion (24) with a bend in the edge region (23) and a portion without a bend, and wherein the counter bearing (4) presses against the portion without a bend in a closed position of the cable duct device.

7. Cable duct device according to one of claims 2 to 6, further comprising a catch hook (3) in the clamping area (22; 72), which is attached to the cable duct cover (2), and further comprising a catch hook catcher (41), which is formed on the counter bearing (4) of the receptacle (75).

8. Cable duct device according to any of the preceding claims, wherein a part of the receptacle (75), in particular the space between the outer region (73) of the cable duct body (7) and the counter bearing (4) of the receptacle (75), forms a sealing space (42) between the cable duct body (7) and the cable duct cover (2), and/or
wherein the edge region (23) of the cable duct cover (2) or the receptacle (75) of the cable duct body (7) has an outer seal (6) to seal the cable duct device (2) from the outside.

9. Cable duct device according to one of claims 2 to 8, wherein the counter bearing (4) of the receptacle (75) is resiliently formed in order to press the cable duct cover (2) resiliently against the outer region (73) of the cable duct body (7).

10. Cable duct device according to any of the foregoing claims, wherein the cable duct device (1) has a larger extension in the clamping area (22; 72) than in the fixing area (21; 71) in a direction substantially perpendicular to the cable duct cover (2) when the cable duct device (1) is in the closed position.

11. The cable duct device according to any of the preceding claims, further comprising a fastening device (90) for fastening the cable duct device (1) to a rail vehicle, wherein the fastening device (90) is provided in particular on a side opposite to the cable duct opening (76).

12. Rail vehicle having a cable duct device (1) according to any of the preceding claims.

13. Rail vehicle according to claim 12, wherein the rail vehicle has an outer lining and the cable duct cover (2) forms part of the outer lining of the rail vehicle.

14. Railway vehicle according to any one of claims 12 or 13, further comprising a car body, wherein the cable duct device (1) is laterally attached to the car body.

15. Method for mounting a cable duct device (1) on a rail vehicle, comprising:
fixing a cable duct body (7) to a car body of a rail vehicle;
inserting an edge region (23) of a cable duct cover (2) into a receptacle (75) of the cable duct body (7);
pivoting the cable duct cover (2) in the receptacle (75) until the cable duct cover (2) is clamped in the receptacle (75) of the cable duct body (7) and the cable duct cover (2) clamps the cable duct body (7) in a clamping area (22); 72) of the cable duct device (1), wherein the receptacle (75) is formed by an outer region (73) of the cable duct body (7) and a counter bearing (4), and wherein the counter bearing (4) of the receptacle (75) is located in the cable duct body (7), and wherein, when the edge region (23) of the cable duct cover (2) is inserted in the receptacle (75), the counter-bearing (4) presses the cable duct cover (2) against the outer region of the receptacle (75) and thereby exerts a clamping force on the edge region (23) of the cable duct cover (2); and
detachable fixing of the cable duct cover (2) in a fastening area (21; 71) of the cable duct device (1) with a fixing means (8).

## Revendications

1. Dispositif de goulotte de câble (1) pour un véhicule sur rails, présentant :
un corps de goulotte de câble (7) avec une ouverture de goulotte de câble (76) et un couvercle de goulotte de câble (2) servant à fermer l'ouverture de goulotte de câble (76),
dans lequel le corps de goulotte de câble (7) présente une zone de coincement (22 ; 72) avec un logement (75) pour une zone de bord (23) du couvercle de goulotte de câble (2), dans lequel la zone de bord (23) du couvercle de goulotte de câble (2) peut être insérée et qui est réalisé en tant que palier de pivotement servant à faire pivoter le couvercle de goulotte de câble (2) par rapport au corps de goulotte de câble (7), et présente une zone de fixation (21 ; 71) avec un moyen de fixation (8) servant à bloquer de manière amovible le couvercle de goulotte de câble (2) au niveau du corps de goulotte de câble (7), dans lequel l'ouverture de goulotte de câble (76) est disposée entre la zone de fixation (21 ; 71) et la zone de coincement (22 ; 72) ; et
dans lequel pour fermer l'ouverture de goulotte de câble (76) par pivotement du couvercle de goulotte de câble (2) par rapport au corps de goulotte de câble (7), la zone de bord (23), insérée dans le logement du corps de goulotte de câble (7), du couvercle de goulotte de câble (2) peut être assemblée par coincement dans le logement (75) du corps de goulotte de câble (7) et le moyen de fixation (8) maintient le couvercle de goulotte de câble (2) dans sa position fermée,
dans lequel le logement (75) est formé par une zone extérieure (73) du corps de goulotte de câble (7) et un contre-palier (4) et dans lequel le contre-palier (4) du logement (75) se trouve dans le corps de goulotte de câble (7),
dans lequel lorsque la zone de bord (23) du couvercle de goulotte de câble (2) est insérée dans le logement (75), le contre-palier (4) pousse le couvercle de goulotte de câble (2) au niveau de la zone extérieure du logement (75) et exerce ce faisant une force de coincement sur la zone de bord (23) du couvercle de goulotte de câble (2).

2. Dispositif de goulotte de câble selon la revendication 1, dans lequel le contre-palier (4) du logement (75) est fixé dans le corps de goulotte de câble (7) au niveau du côté intérieur du corps de goulotte de câble (7).

3. Dispositif de goulotte de câble selon la revendication 2, dans lequel le contre-palier (4) du logement (75) du corps de goulotte de câble (7) présente une butée (41), qui pousse le couvercle de goulotte de câble (2) dans sa position fermée contre la zone extérieure (73) du corps de goulotte de câble (7), dans lequel la butée (41) présente en particulier une section, qui pousse, dans la position fermée, de manière perpendiculaire sur le couvercle de goulotte de câble (2).

4. Dispositif de goulotte de câble selon la revendication 2 ou 3, dans lequel le contre-palier (4) présente une arête étanche (5) pour fournir un joint d'étanchéité intérieur dans le corps de goulotte de câble (7) entre le corps de goulotte de câble (7) et le couvercle de goulotte de câble (2).

5. Dispositif de goulotte de câble selon l'une quelconque des revendications 2 à 4, dans lequel la zone extérieure (73) du logement (75) arrête un bord de l'ouverture de goulotte de câble et dans lequel le contre-palier (4) du logement (75) s'étend dans une direction au-delà du bord de l'ouverture de goulotte de câble (76).

6. Dispositif de goulotte de câble selon l'une quelconque des revendications 2 à 5, dans lequel le couvercle de goulotte de câble (2) présente une section (24) avec coude dans la zone de bord (23) et une section sans coude et dans lequel le contre-palier (4) pousse, dans une position fermée du dispositif de goulotte de câble, contre la section sans coude.

7. Dispositif de goulotte de câble selon l'une quelconque des revendications 2 à 6, présentant par ailleurs un crochet d'arrêt (3) dans la zone de coincement (22 ; 72), qui est installé au niveau du couvercle de goulotte de câble (2), et présentant par ailleurs un système attrapant le crochet d'arrêt (41), qui est réalisé au niveau du contre-palier (4) du logement (75).

8. Dispositif de goulotte de câble selon l'une quelconque des revendications précédentes, dans lequel une partie du logement (75), en particulier l'espace entre la zone extérieure (73) du corps de goulotte de câble (7) et le contre-palier (4) du logement (75), forme un espace étanche (42) entre le corps de goulotte de câble (7) et le couvercle de goulotte de câble (2), et/ou dans lequel la zone de bord (23) du couvercle de goulotte de câble (2) ou le logement (75) du corps de goulotte de câble (7) présente un joint d'étanchéité (6) extérieure afin d'étanchéifier par rapport à l'extérieur le dispositif de goulotte de câble (2).

9. Dispositif de goulotte de câble selon l'une quelconque des revendications 2 à 8, dans lequel le contre-palier (4) du logement (75) est réalisé sur ressorts afin de pousser le couvercle de goulotte de câble (2) sur ressorts contre la zone extérieure (73) du corps de goulotte de câble (7).

10. Dispositif de goulotte de câble selon l'une quelconque des revendications précédentes, dans lequel le dispositif de goulotte de câble (1) présente dans la zone de coincement (22 ; 72) une extension plus grande que dans la zone de fixation (21 ; 71) dans une direction sensiblement perpendiculaire par rapport au couvercle de goulotte de câble (2) quand le dispositif de goulotte de câble (1) se trouve dans la position fermée.

11. Dispositif de goulotte de câble selon l'une quelconque des revendications précédentes, présentant par ailleurs un dispositif de fixation (90) afin de fixer le dispositif de goulotte de câble (1) au niveau d'un véhicule sur rails, dans lequel le dispositif de fixation (90) est fourni en particulier au niveau d'un côté faisant face à l'ouverture de goulotte de câble (76).

12. Véhicule sur rails avec un dispositif de goulotte de câble (1) selon l'une quelconque des revendications précédentes.

13. Véhicule sur rails selon la revendication 12, dans lequel le véhicule sur rails présente un habillage extérieur et le couvercle de goulotte de câble (2) forme une partie de l'habillage extérieur du véhicule sur rails.

14. Véhicule sur rails selon l'une quelconque des revendications 12 ou 13, présentant par ailleurs une caisse de voiture, dans lequel le dispositif de goulotte de câble (1) est fixé de manière latérale au niveau de la caisse de voiture.

15. Procédé de montage d'un dispositif de goulotte de câble (1) au niveau d'un véhicule sur rails, présentant :
la fixation d'un corps de goulotte de câble (7) au niveau d'une caisse de véhicule d'un véhicule sur rails ;
le placement d'une zone de bord (23) d'un couvercle de goulotte de câble (2) dans un logement (75) du corps de goulotte de câble (7) ;
le pivotement du couvercle de goulotte de câble (2) dans le logement (75) jusqu'à ce que le couvercle de goulotte de câble (2) se coince dans le logement (75) du corps de goulotte de câble (7) et le couvercle de goulotte de câble (2) ferme le corps de goulotte de câble (7) dans une zone de coincement (22 ; 72) du dispositif de goulotte de câble (1), dans lequel le logement (75) est formé par une zone extérieure (73) du corps de goulotte de câble (7) et un contre-palier (4), et dans lequel le contre-palier (4) du logement (75) se trouve dans le corps de goulotte de câble (7) et dans lequel lorsque la zone de bord (23) du couvercle de goulotte de câble (2) est insérée dans le logement (75), le contre-palier (4) pousse le couvercle de goulotte de câble (2) au niveau de la zone extérieure du logement (75) et exerce ainsi une force de coincement sur la zone de bord (23) du couvercle de goulotte de câble (2) ; et
de blocage amovible du couvercle de goulotte de câble (2) dans une zone de fixation (21 ; 71) du dispositif de goulotte de câble (1) avec un moyen de fixation (8).
